# EUROPEAN PATENT APPLICATION

(11) **EP 2 339 462 A1**
(43) Date of publication of application: **29.06.2011**
(21) Application number: 10252132.5
(22) Date of filing: 16.12.2010
(51) Int. Cl.: G06F 9/455

(54) **Efficient nested virtualization**

(30) Priority: 22.12.2009 US 644847
(71) Applicant: Intel Corporation, Santa Clara, CA 95052 (US)
(72) Inventor: Dong, Yao Zu, Shanghai, 31, 200042 (CN)
(74) Representative: Beresford, Keith Denis Lewis

(57) **Abstract**

In one embodiment of the invention, the exit and/or entry process in a nested virtualized environment is made more efficient. For example, a layer 0 (L0) virtual machine manager (VMM) may emulate a layer 2 (L2) guest interrupt directly, rather than indirectly through a layer 1 (L1) VMM. This direct emulation may occur by, for example, sharing a virtual state (e.g., virtual CPU state, virtual Device state, and/or virtual physical Memory state) between the L1 VMM and the L0 VMM. As another example, L1 VMM information (e.g., L2 physical to machine address translation table) may be shared between the L1 VMM and the L0 VMM.

## Description

### Background

A virtual machine system permits a physical machine to be partitioned or shared such that the underlying hardware of the machine appears as one or more independently operating virtual machines (VMs). A Virtual Machine Monitor (VMM) may run on a computer and present to other software an abstraction of one or more VMs. Each VM may function as a self-contained platform, running its own operating system (OS) and/or application software. Software executing within a VM may collectively be referred to as guest software.

The guest software may expect to operate as if it were running on a dedicated computer rather than a VM. That is, the guest software may expect to control various events and to have access to hardware resources on the computer (e.g., physical machine). The hardware resources of the physical machine may include one or more processors, resources resident on the processor(s) (e.g., control registers, caches, and others), memory (and structures residing in memory such as descriptor tables), and other resources (e.g., input-output (I/O) devices) that reside in the physical machine. The events may include, for example, interrupts, exceptions, platform events (e.g., initialization (INIT) or system management interrupts (SMIs)), and the like.

The VMM may swap or transfer guest software state information (state) in and out of the physical machine's processor(s), devices, memory, registers, and the like as needed. The processor(s) may swap some state information in and out during transitions between a VM and the VMM. The VMM may enhance performance of a VM by permitting direct access to the underlying physical machine in some situations. This may be especially appropriate when an operation is being performed in non-privileged mode in the guest software, which limits access to the physical machine, or when operations will not make use of hardware resources in the physical machine to which the VMM wishes to retain control. The VMM is considered the host of the VMs.

The VMM regains control whenever, for example, a guest operation may affect the correct execution of the VMM or any of the VMs. Usually the VMM examines such operations, determining if a problem exists before permitting the operation to proceed to the underlying physical machine or emulating the operation and/or hardware on behalf of a guest. For example, the VMM may need to regain control when the guest accesses I/O devices, attempts to change machine configuration (e.g., by changing control register values), attempts to access certain regions of memory, and the like.

Existing physical machines that support VM operation may control the execution environment of a VM using a structure such as a Virtual Machine Control Structure (VMCS), Virtual Machine Control Block (VMCB), and the like. Taking a VMCS for example, the VMCS may be stored in a region of memory and may contain, for example, state of the guest, state of the VMM, and control information indicating under which conditions the VMM wishes to regain control during guest execution. The one or more processors in the physical machine may read information from the VMCS to determine the execution environment of the VM and VMM, and to constrain the behavior of the guest software appropriately.

The processor(s) of the physical machine may load and store machine state information when a transition into (i.e., entry) or out (i.e., exit) of a VM occurs. However, with nested virtualization environments where, for example, a VMM is hosted by another VMM, the entry and exit schemes may become cumbersome and inefficient while trying to manage, for example, state information and memory information.

### Brief Description of the Drawings

Features and advantages of embodiments of the present invention will become apparent from the appended claims, the following detailed description of one or more example embodiments, and the corresponding figures, in which:
Figures 1 and 2 illustrate a conventional nested virtualization environment and method for emulating devices.
Figure 3 includes a method for efficient nested virtualization in one embodiment of the invention.
Figure 4 includes a block system diagram for implementing various embodiments of the invention.

### Detailed Description

In the following description, numerous specific details are set forth. However, it is understood that embodiments of the invention may be practiced without these specific details. Well-known circuits, structures and techniques have not been shown in detail to avoid obscuring an understanding of this description. References to "one embodiment", "an embodiment", "example embodiment", "various embodiments" and the like indicate the embodiment(s) so described may include particular features, structures, or characteristics, but not every embodiment necessarily includes the particular features, structures, or characteristics. Further, some embodiments may have some, all, or none of the features described for other embodiments. Also, as used herein "first", "second", "third" and the like describe a common object and indicate that different instances of like objects are being referred to. Such adjectives are not intended to imply the objects so described must be in a given sequence, either temporally, spatially, in ranking, or in any other manner.

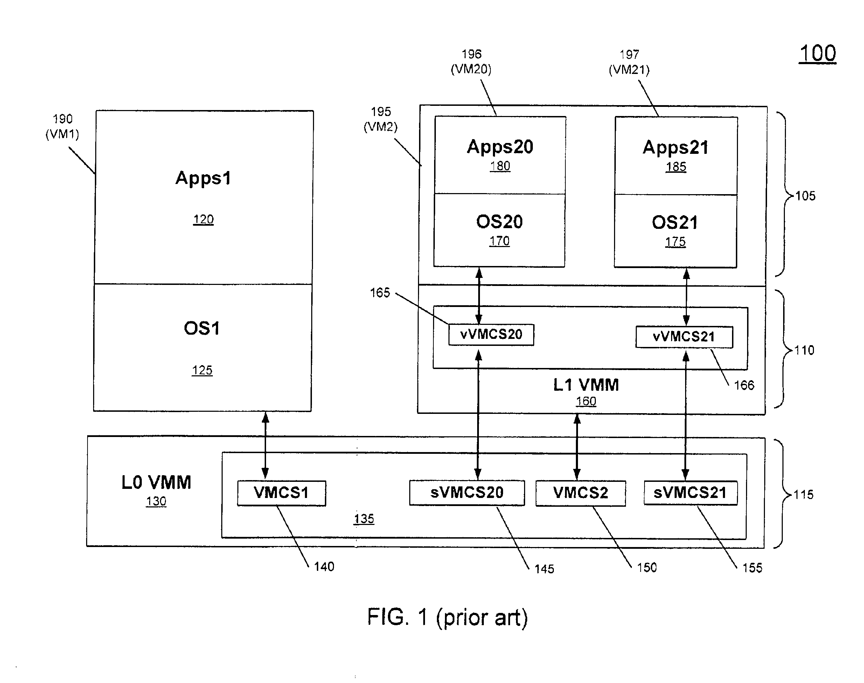

Figure 1 includes a block schematic diagram of a conventional layered nested virtualization environment. For example, system 100 includes layer 0 (L0) 115, layer 1 (L1) 110, and layer 2 (L2) 105. VM1 190 and VM2 195 are both located "on" or executed "with" L0 VMM 130. VM1 190 includes application Apps1 120 supported by guest operating system OS1 125. VM2 195 "includes" L1 VMM 160. Thus, system 100 is a nested virtualization environment with, for example, L1 VMM 160 located on or "nested" in L0 VMM 130. L1 VMM 160 is operated "with" lower layer L0 VMM 130. L1 VMM 160 "supports" guest VM20 196 and guest VM21 197, which are respectively running OS20 170/Apps20 180 and OS21 175/Apps21 185.

L0 VMM 130 may be, for example, a Kernel Virtual Machine (KVM) that may utilize Intel's Virtualization Technology (VT), AMD's Secure Virtual Machine, and the like so VMMs can run guest operating systems (OSs) and applications. L0 VMM 130, as well as other VMMs described herein, may include a hypervisor, which may have a software program that manages multiple operating systems (or multiple instances of the same operating system) on a computer system. The hypervisor may manage the system's processor, memory, and other resources to allocate what each operating system requires or desires. Hypervisors may include fat hypervisors (e.g., VMware ESX) that comprise device drivers, memory management, OS, and the like. Hypervisors may also include thin hypervisors (e.g., KVM) coupled between hardware and a host OS (e.g., Linux). Hypervisors may further include hybrid hypervisors having a service OS with a device driver running in guest software (e.g., Xen plus domain 0).

In system 100 a virtual machine extension (VMX) engine is presented to guest L1VMM 160, which may create guests VM20 196 and VM21 197. VM20 196 and VM21 197 may be managed respectively by virtual VMCSs vVMCS20 165 and vVMCS21 166. vVMCS20 165 and vVMCS21 166 may each be shadowed with a real VMCS such as sVMCS20 145 and sVMCS21 155. Each sVMCS 145, 155 may be loaded as a physical VMCS when executing a L2 guest such as VM20 196 or VM21 197.

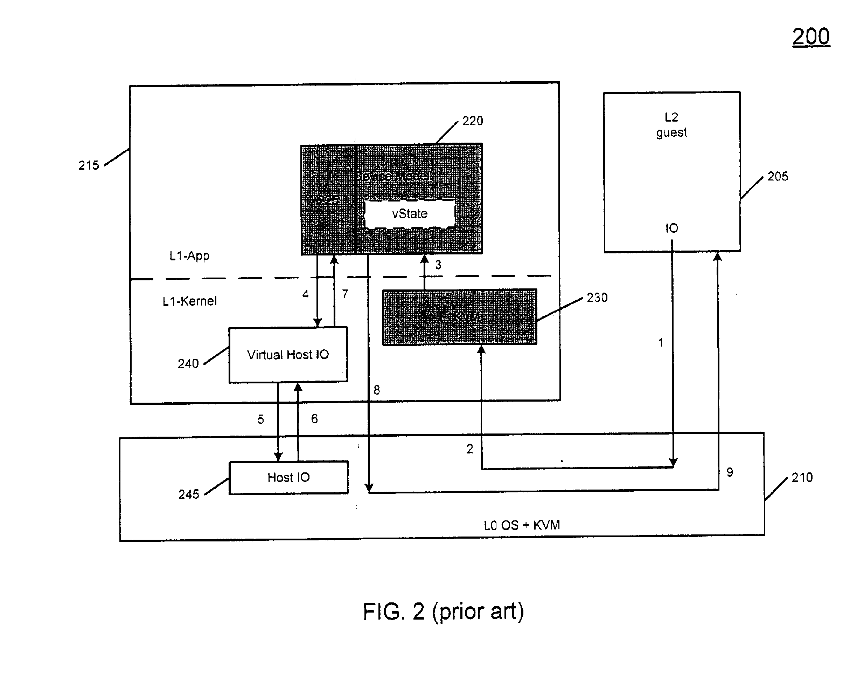

Figure 2 illustrates a conventional nested virtualization environment and method for emulating devices. Figure 2 may be used with, for example, a Linux host OS and KVM 210. Arrow 1 shows a VM exit from L2 guest 205 (e.g., VM20 196, VM21 197 of Figure 1) being captured by L0 VMM 210 (which is analogous to L0 VMM 130 of Figure 1). Arrow 2 shows L0 VMM 210 bouncing or directing the VM Exit to L1 guest 215 (which is analogous to L1 VMM 160 of Figure 1) or, more specifically, L1 KVM 230 module.

Arrow 3 leads to L1 VMM 215 (parent of L2 guest 205), which emulates an entity (e.g., guest, operation, event, device driver, device, and the like) such as L2 guest 205 I/O behavior using, for example, any of device model 220, a backend driver complementary to a paravitualized guest device's frontend driver, and the like. Device modeling may help the system interface with various device drivers. For example, device models may translate a virtualized hardware layer/interface from the guest 205 to the underlying devices. The emulation occurs like a normal single layer (non-nested) privileged resource access but with nested virtualization the I/O event (e.g., request) is first trapped by L0 VMM 210, and then L0 VMM 210 bounces the event into L1 VMM 215 if L1 VMM 215 is configured to receive the event. L1 VMM device model 220 may maintain a virtual state (vState) 225 per guest and may ask an L1 OS for I/O event service in a manner similar to what happens with single layer virtualization.

Also, in nested virtualization, for example, the I/O may be translated from L2 guest 205 to L1 virtual Host I/O 240. Virtual Host I/O 240 is emulated by another layer of device model (not shown in Figure 2) located in L0 VMM 210. This process can be slower than single layer virtualization. Thus, virtual Host I/O 240 may be a device driver emulated by a device model in L0 VMM 210. Virtual Host I/O 240 may also be a paravirtualized frontend driver serviced by a backend driver in L0 VMM 210. Host I/O 245 may be an I/O driver for a physical I/O device. Via arrows 4 and 5 L1 VMM 215 may forward the outbound I/O (e.g., network packet) to the underlying hardware via L0 VMM 210.

The inbound I/O may then be received from the hardware and then may be routed through L0 VMM 210, by a L0 device model or backend driver or the like, to L1 VMM 215 virtual Host I/O 240 via arrow 6 and to Device Model 220 via arrow 7. After Device Model completes the emulation, it may ask L1 VMM 215 to notify L2 guest 205, via L0 VMM 210, to indicate the completion of servicing the I/O via arrows 8 and 9. L0 VMM 210 may emulate a virtual VM Resume event from L1 VMM 215 to resume L2 guest 205.

As seen in method 200, servicing an I/O using a conventional nested virtualization process is an indirect venture due to, for example, privilege restraints inherent to the multilayered virtualized environment. For example, with nested virtualization L1 VMM 215 operates in a de-privileged manner and consequently must rely on privileged L0 VMM 210 to access privileged resources. This is inefficient.

The following illustrates this inefficiency. For example, an I/O emulation in a single layer VMM may access system privileged resources many times (e.g., number of accesses ("NA")) to successfully emulate the guest activity. Specifically, the single layer VMM may access privileged resources such as a Control Register (CR), a Physical I/O register, and/or a VMCS register in its I/O emulation path. However, in a nested virtualization the process may be different. For example, a VMM, which emulates a L2 guest I/O in a single layer virtualization, becomes a L1 VMM in a nested virtualization structure. This L1 VMM now runs in a non-privileged mode. Each privileged resource access in L1 VMM will now trigger a VM Exit to L0 VMM for further emulation. This triggering is in addition to the trap that occurs between the L2 guest VM and the L1 VMM. Thus, there is an added "number of cycles per access" ("NC") or "Per_VM_Exit_cost" for every access. Consequently, the additional cost of an I/O emulation of a L2 guest becomes L2NC = NC * NA. This is a large computational overhead as compared with a single layer virtualization. When using KVMs, the NC can be approximately 5,000 cycles and the NA can be approximately 25. Thus, L2NC = 5,000 cycles/access*25 accesses = 125,000 cycles of overhead.

In one embodiment of the invention, the exit and/or entry process in a nested virtualized environment is made more efficient. For example, an L0 VMM may emulate an L2 guest I/O directly, rather than indirectly through a L1 VMM. This direct emulation may occur by, for example, sharing a virtual guest state (e.g., virtual CPU state, virtual Device state, and/or virtual physical Memory state) between the L1 VMM and the L0 VMM. As another example, L1 VMM information (e.g., L2 physical to machine ("p2m") address translation table addressed below) may be shared between the L1 VMM and the L0 VMM.

In one embodiment of the invention this efficiency gain may be realized because, for example, the same VMM is executed on both the L0 and L1 layers. This situation may occur in a layered VT situation when, for example, running a first KVM on top of a second KVM. In such a scenario the device model in both the L0 and L1 VMMs is the same and, consequently, the device models understand the virtual device state formats used by either the L0 or L1 VMM.

However, embodiments of the invention do not require the same VMM be used for the L0 and L1 layers. Some embodiments of the invention may use different VMM types for the L0 and L1 layers. In such a case virtual state information of the L2 guest may be included in the L1 VMM and L1 VMM device model but still shared with and understood by the L0 VMM and L0 VMM device model.

In contrast, in conventional systems the virtual guest state known to the L1 VMM is not known or shared with the L0 VMM (and vice versa). This lack of sharing may occur because, for example, L1 VMM does not know whether it runs on a native or virtualized platform. Also, L1 VMM may not understand, for example, the bit format/semantics of shared states that the L0 VMM recognizes. Furthermore, in conventional systems the L2 guest is a guest of L1 VMM and therefore is unaware of L0 VMM. Thus, as with a single layer virtualization scenario, a L2 guest Exit goes to the L1 VMM and not the L0 VMM. As described in relation to Figure 2, with two layer virtualization cases the L0 VMM still ensures L2 guest VM Exits go to the L1 VMM. Thus, some embodiments of the invention differ from conventional systems because, for example, virtual states (e.g., virtual guest state) are shared between L0 and L1 VMMs. Consequently, the L0 VMM can emulate, for example, the L2 guest I/O and avoid some of the overhead conventionally associated with nested virtualization.

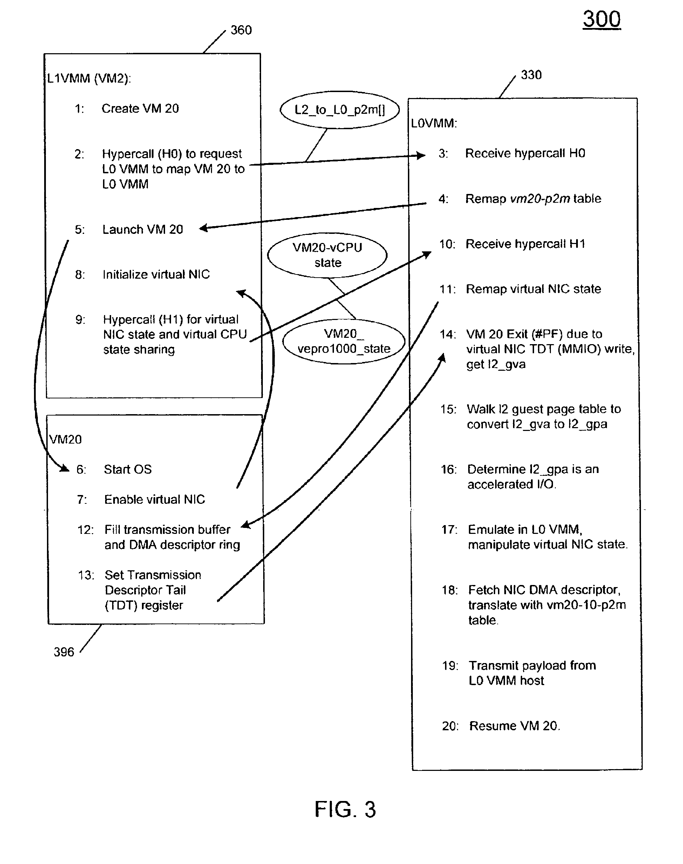

Figure 3 includes a method 300 for efficient nested virtualization. Method 300 is shown handling a transmission of a network packet for purposes of explanation, but the method is not constrained to handling such events and instead is applicable to various events, such as I/O events (e.g., receiving, handling, and transmitting network information, disk reads and writes, stream input and output, and the like). Furthermore, this approach is not limited to working only with entities such as an emulated device. For example, embodiments of the method can work with entities such as a paravirtualized device driver as well.

However, before fully addressing Figure 3 virtualized and paravirtualized environments are first addressed more fully. Virtualized environments include fully virtualized environments, as well as paravirtualized environments. In a fully virtualized environment, each guest OS may operate as if its underlying VM is simply an independent physical processing system that the guest OS supports. Accordingly, the guest OS may expect or desire the VM to behave according to the architecture specification for the supported physical processing system. In contrast, in paravirtualization the guest OS helps the VMM to provide a virtualized environment. Accordingly, the guest OS may be characterized as virtualization aware. A paravirtualized guest OS may be able to operate only in conjunction with a particular VMM, while a guest OS for a fully virtualized environment may operate on two or more different kinds of VMMs. Paravirtualization may make changes to the source code of the guest operating system, such as the kernel, desirable so that it can be run on the specific VMM.

Paravirtualized I/O (e.g., I/O event) can be used with or in a paravirtualized OS kernel (modified) or a fully virtualized OS kernel (unmodified). Paravirtualized I/O may use a frontend driver in the guest device to communicate with a backend driver located in a VMM (e.g., L0 VMM). Also, paravirtualization may use shared memory to convey bulk data to save trap-and-emulation efforts, while it may be desirable for a fully virtualized I/O to follow semantics presented by the original emulated device.

Returning to Figure 3, method 300 includes L0 VMM 330 and L1 VMM 360, which supports VM 20 396, all of which combine to form a virtualized environment for a network interface card (NIC) such as, for example, an Intel Epro1000 (82546EB) NIC. Before method 300 begins, L0 VMM 330 may create VM2 (not shown), which may run L1 VMM 360. Also, L0 VMM 330 may have knowledge of VM2 memory allocation or L1 guest pseudo physical address to layer 0 machine address translation table or map (e.g., L1_to_L0-p2m[]). In line 1, L1 VMM 360 may create L2 guest VM20 396, which is included "in" VM2. L1 VMM 360 may have knowledge of pseudo P2M mapping for VM20 396 (i.e., VM20 396 guest physical address to L1 VMM 360 pseudo physical address (e.g., L2_to_L1_p2m[])). In line 2, L1 VMM 360 may issue a request (e.g., through hypercall H0 or other communication channel) to ask L0 VMM 330 to map the L2 guest physical address to the L0 VMM 330 real physical machine address table for VM 20 396 (e.g., L2_to_L0-p2m []).

In line 3 L0 VMM 330 may receive the request from line 2. In line 4 L0 VMM 330 may remap the VM20 guest physical address to L0 machine address (L2_to_L0_p2m []) using information (i.e., L2_to_L1_p2m[]) previously received or known. This is achieved by, for example, utilizing a P2M table of L1 VMM 360 or L1 guest (VM2) (L1_to_L0_p2m[]), which is possible because L2 guest memory is part of L1 guest (VM2). For example, for a given L2 guest physical address x: L2_to_L0_p2m [x] = L1-to_L0_p2m[L2-to_L1_p2m[x]].

In line 5 L1 VMM 360 may launch VM20 396 and execution of VM20 396 may start. In line 6 the VM 20 OS may start. In line 7 execution of the VM20 396 OS may enable a virtual device such as a virtual NIC device.

This may cause an initialization of the virtual NIC device in line 8. In line 9 L1 VMM 360 may request to communicate with L0 VMM 330 (e.g., through hypercall H1 or other communication channel) to share a virtual guest state of the NIC device (e.g., vm20_vepro1000_state) and/or CPU. A guest virtual CPU or processor state may include, for example, vm20-vCPU-state, which may correspond to a L2 virtual control register (CR) CR3 such as 12_vCR3 of VM20 396. State information may be shared through, for example, shared memory where both L1 VMM and L0 VMM can see shared states and manipulate those states.

In line 10 L0 VMM 330 may receive the request (e.g., hypercall H1) and in line 11 L0 VMM 330 may remap the virtual NIC device state into the L0 VMM 430 internal address space. Consequently, L0 VMM 430 may be able to access the virtual NIC and CPU state information.

In line 12 VM 20 may start to transmit a packet by filling the transmission buffer and its direct memory access (DMA) control data structure, such as a DMA descriptor ring structure in an Intel 82546EB NIC controller. L0 VMM 330 is now bypassing L1 VMM 360 and directly interfacing VM 20 396. In line 13 VM 20 may notify the virtual NIC device of the completion of the filled DMA descriptor, as VM 20 would do if operating in its native environment, by programming hardware specific registers such as the transmission descriptor tail (TDT) register in the Intel 82546EB NIC controller. The TDT register may be a Memory Mapped I/O (MMIO) register but may also be, for example, a Port I/O. L1 VMM 360 may not have direct translation for the MMIO address, which may allow L1 VMM 360 to trap and emulate the guest MMIO access through an exit event (e.g., Page Fault (#PF) VM Exit). Consequently, L0 VMM 330 may not have the translation for the MMIO address, which emulates L1 VMM translation.

In line 14 the access of TDT register triggers a VM Exit (#PF). L0 VMM 330 may obtain the linear address of the #PF (e.g., MMIO access address such as 12_gva) from VM Exit information. In line 15 L0 VMM 330 may walk or traverse the L2 guest page table to convert 12_gva to its L2 guest physical address (e.g., 12_gpa). The L2 guest page table walk or traversal may start from the L2 guest physical address pointed by L2 guest CR3 (e.g., 12_vcr3).

In line 16 LO VMM 330 may determine whether 12_gpa is an accelerated I/O (i.e., I/O emulation may bypass L1 VMM 215). If 12_gpa is an accelerated I/O then, in line 17, L0 VMM may perform an emulation based on the shared virtual NIC and CPU state information (e.g., vm20_vepro1000_state and vm20-vCPU-state). In line 18 L0 VMM 330 may fetch the L2 virtual NIC device DMA descriptor and perform a translation with the L2_to-L0_p2m table to convert the 12 guest physical address to a real machine physical address. In line 19 L0 VMM 330 may have the transmission payload and transmit the payload in the L0 Host I/O. LO VMM 330 may also update the vm20_vepro1000_state and vm20-vCPU-state in the shared data. In line 20 the L2 guest may resume.

Thus, L0 VMM 330 can use the shared (between L0 VMM 330 and L1 VMM 360) L2_to_L0-p2m table, vm20_vepro1000_state, and vm20-vCPU-state (e.g., 12 vCR3) to access the virtual NIC device DMA descriptor ring and transmission buffer and thus send the packet directly to an outside network without sending the packet indirectly to the outside network via L1 VMM 360. Had L0 VMM 330 needed to pass the L2 guest I/O access to L1 VMM 360, doing so may have triggered many VM Exit/Entry actions between L1 VMM 360 and L0 VMM 330. These Exit/Entry actions may have resulted in poor performance.

In the example of method 300 the packet transmission did not trigger an interrupt request (IRQ). However, if an IRQ had been caused due to, for example, transmission completion, L1 VMM 360 may be used for virtual interrupt injection. However, in one embodiment further optimization may be taken to bypass L1 VMM intervention for IRQ injection by sharing interrupt controller state information such as, for example, virtual Advanced Programmable Interrupt Controller (APIC) state, I/O APIC state, Message Signaled Interrupt (MSI) state, and virtual CPU state information directly manipulated by L0 VMM 330.

Method 300 concerns using a device model for packet transmission. However, some embodiments of the invention may employ a methodology for receiving a packet that would not substantively differ from method 300 and hence, will not be addressed specifically herein. Generally, the same method can directly copy the received packet (in L0 VMM 330) to the L2 guest buffer and update the virtual NIC device state if L0 VMM can decide the final recipient of the packet is L2 guest. For this, L1 VMM 330 may share its network configuration information (e.g., IP address of L2 guest, filtering information of L1 VMM) with L0 VMM. Also, packets sent to different L2 VMs may arrive at the same physical NIC. Consequently, a switch in L0 VMM may distribute the packets to different VMs based on, for example, media access control (MAC) address, IP address, and the like.

A method similar to method 300 may be employed with a paravirtualized device driver as well. For example, a paravirtualized network device may operate similar to fully emulated devices. However, in a paravirtualized device the L2 guest or frontend driver may be a VMM aware driver. A service VM (e.g., L1 VMM 215 in Figure 2) may run a backend driver to service the L2 guest I/O request rather than device model 220 in Figure 2. The L0 VMM may have the capability to understand the shared device state from the L1 VMM backend driver and service the request of L2 guest directly, which may mean L0 VMM may also run the same backend driver as that in L1 VMM in one embodiment of the invention. Specifically, using the packet transmission example of Figure 3, lines 12 and 13 may be altered when working in a paravirtualized environment. Operations, based on real device semantics, in Lines 12 and 13 may be replaced with a more efficient method such as a hypercall from VM 20 396, for the purpose of informing virtual hardware to start a packet transmission. Also, lines 14-18, servicing the request from lines 12-13, may be slightly different with parameters passed based on real device semantics. For example, L0 VMM may fetch the guest transmission buffer using a buffer address passed by the paravirtualized I/O defined method. Receiving a packet with the paravirtualized I/O operation is similar to the above process for sending a packet and consequently, the method is not addressed further herein.

Thus, various embodiments described herein may allow a L0 VMM to bypass a L1 VMM when conducting, for example, L2 guest I/O emulation/servicing. In other words, various embodiments directly emulate/service a virtualized entity (e.g., fully virtualized device, paravirtualized device, and the like) to the L2 guest with the L0 VMM bypassing, to some extent, the L1 VMM. This may be done by sharing L2 guest state information between L0 VMM and L1 VMM, which may conventionally be known only to a parent VMM (e.g., such as between a L2 guest and L1 VMM). Sharing between a L1 VMM and L0 VMM helps bypass the L1 VMM for better performance.

A module as used herein refers to any hardware, software, firmware, or a combination thereof. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices. However, in another embodiment, logic also includes software or code integrated with hardware, such as firmware or micro-code.

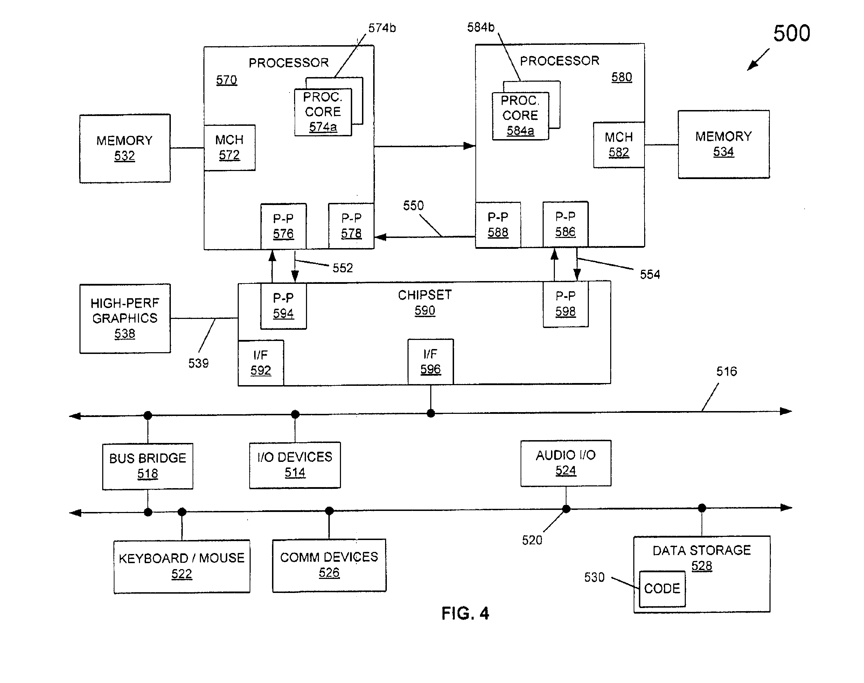

Embodiments may be implemented in many different system types. Referring now to Figure 4, shown is a block diagram of a system in accordance with an embodiment of the present invention. Multiprocessor system 500 is a point-to-point interconnect system, and includes a first processor 570 and a second processor 580 coupled via a point-to-point interconnect 550. Each of processors 570 and 580 may be multicore processors, including first and second processor cores (i.e., processor cores 574a and 574b and processor cores 584a and 584b), although potentially many more cores may be present in the processors. The term "processor" may refer to any device or portion of a device that processes electronic data from registers and/or memory to transform that electronic data into other electronic data that may be stored in registers and/or memory.

First processor 570 further includes a memory controller hub (MCH) 572 and point-to-point (P-P) interfaces 576 and 578. Similarly, second processor 580 includes a MCH 582 and P-P interfaces 586 and 588. MCHs 572 and 582 couple the processors to respective memories, namely a memory 532 and a memory 534, which may be portions of main memory (e.g., a dynamic random access memory (DRAM)) locally attached to the respective processors. First processor 570 and second processor 580 may be coupled to a chipset 590 via P-P interconnects 552 and 554, respectively. Chipset 590 includes P-P interfaces 594 and 598.

Furthermore, chipset 590 includes an interface 592 to couple chipset 590 with a high performance graphics engine 538, by a P-P interconnect 539. In turn, chipset 590 may be coupled to a first bus 516 via an interface 596. Various input/output (I/O) devices 514 may be coupled to first bus 516, along with a bus bridge 518, which couples first bus 516 to a second bus 520. Various devices may be coupled to second bus 520 including, for example, a keyboard/mouse 522, communication devices 526, and data storage unit 528 such as a disk drive or other mass storage device, which may include code 530, in one embodiment. Further, an audio I/O 524 may be coupled to second bus 520.

Embodiments may be implemented in code and may be stored on a storage medium having stored thereon instructions which can be used to program a system to perform the instructions. The storage medium may include, but is not limited to, any type of disk including floppy disks, optical disks, optical disks, solid state drives (SSDs), compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

Embodiments of the invention may be described herein with reference to data such as instructions, functions, procedures, data structures, applications, application programs, configuration settings, code, and the like. When the data is accessed by a machine, the machine may respond by performing tasks, defining abstract data types, establishing low-level hardware contexts, and/or performing other operations, as described in greater detail herein. The data may be stored in volatile and/or non-volatile data storage. For purposes of this disclosure, the terms "code" or "program" or "application" cover a broad range of components and constructs, including drivers, processes, routines, methods, modules, and subprograms. Thus, the terms "code" or "program" or "application" may be used to refer to any collection of instructions which, when executed by a processing system, performs a desired operation or operations. In addition, alternative embodiments may include processes that use fewer than all of the disclosed operations (e.g., Figure 3), processes that use additional operations, processes that use the same operations in a different sequence, and processes in which the individual operations disclosed herein are combined, subdivided, or otherwise altered.

While the present invention has been described with respect to a limited number of embodiments, those skilled in the art will appreciate numerous modifications and variations therefrom. It is intended that the appended claims cover all such modifications and variations as fall within the true spirit and scope of this present invention.

The disclosure of this specification also includes the following clauses numbered 1 through 20:
1. A method comprising:
   generating, using a processor, a first virtual machine (VM) and storing the first VM in a memory coupled to the processor;
   executing a guest application with the first VM;
   executing the first VM with a first virtual machine monitor (VMM);
   executing the first VMM with a second VMM in a nested virtualization environment; and
   directly emulating an underlying virtualized device to the guest with the second VMM;
   wherein the second VMM is included in a lower virtualization layer than the first VMM and the virtualized device is coupled to the processor.
2. The method of clause 1 including directly emulating the device to the guest with the second VMM by bypassing the first VMM.
3. The method of clause 1 including directly emulating the device to the guest with the second VMM by bypassing the first VMM based on sharing virtual device state information, corresponding to the device, between the first and second VMMs.
4. The method of clause 1 including:
   directly emulating the device to the guest with the second VMM by bypassing the first VMM based on sharing virtual processor state information between the first and second VMMs; and
   storing the virtual processor state information in a memory portion coupled to the processor.
5. The method of clause 1 including directly emulating the device to the guest with the second VMM by bypassing the first VMM based on sharing virtual physical memory state information, related to the guest, between the first and second VMMs.
6. The method of clause 1 including directly emulating the device to the guest with the second VMM by bypassing the first VMM based on sharing address translation information, related to the guest, between the first and second VMMs.
7. The method of clause 1, wherein the first and second VMMs include equivalent device models.
8. The method of clause 1, including directly emulating a paravirtualized device driver corresponding to the guest.
9. The method of clause 1, including sending network packet information from the guest directly to the second VMM bypassing the first VMM.
10. An article comprising a medium storing instructions that enable a processor-based system to:
   execute a guest application on a first virtual machine (VM);
   execute the first VM on a first virtual machine monitor (VMM);
   execute the first VMM on a second VMM in a nested virtualization environment; and
   directly emulate an underlying virtualized entity to the guest with the second VMM.
11. The article of clause 10, further storing instructions that enable the system to directly emulate the entity to the guest with the second VMM by bypassing the first VMM.
12. The article of clause 10, further storing instructions that enable the system to directly emulate the entity to the guest with the second VMM by bypassing the first VMM based on sharing virtual entity state information, corresponding to the entity, between the first and second VMMs.
13. The article of clause 10, further storing instructions that enable the system to directly emulate the entity to the guest with the second VMM by bypassing the first VMM based on sharing virtual processor state information between the first and second VMMs.
14. The article of clause 10, further storing instructions that enable the system to directly emulate the entity to the guest with the second VMM by bypassing the first VMM based on sharing virtual memory state information, related to the guest, between the first and second VMMs.
15. The article of clause 10, wherein the entity includes a virtualized device.
16. An apparatus comprising:
   a processor, coupled to a memory, to (1) execute a guest application on a first virtual machine (VM) stored in the memory; (2) execute the first VM on a first virtual machine monitor (VMM); (3) execute the first VMM on a second VMM in a nested virtualization environment; and (4) directly emulate an underlying virtualized entity to the guest with the second VMM.
17. The apparatus of clause 16, wherein the processor is to directly emulate the entity to the guest with the second VMM by bypassing the first VMM.
18. The apparatus of clause 16, wherein the processor is to directly emulate the entity to the guest with the second VMM by bypassing the first VMM based on sharing virtual guest state information between the first and second VMMs.
19. The apparatus of clause 16, wherein the processor is to directly emulate the entity to the guest with the second VMM by bypassing the first VMM based on sharing virtual guest processor state information between the first and second VMMs.
20. The apparatus of clause 16, wherein the processor is to directly emulate the entity to the guest with the second VMM by bypassing the first VMM based on sharing virtual memory state information, related to the guest, between the first and second VMMs.

## Claims

1. A method comprising:
generating, using a processor, a first virtual machine (VM) and storing the first VM in a memory coupled to the processor;
executing a guest application with the first VM;
executing the first VM with a first virtual machine monitor (VMM);
executing the first VMM with a second VMM in a nested virtualization environment; and
directly emulating an underlying virtualized device to the guest with the second VMM;
wherein the second VMM is included in a lower virtualization layer than the first VMM and the virtualized device is coupled to the processor.

2. The method of claim 1 including directly emulating the device to the guest with the second VMM by bypassing the first VMM.

3. The method of claim 1 including directly emulating the device to the guest with the second VMM by bypassing the first VMM based on sharing virtual device state information, corresponding to the device, between the first and second VMMs.

4. The method of claim 1 including:
directly emulating the device to the guest with the second VMM by bypassing the first VMM based on sharing virtual processor state information between the first and second VMMs; and
storing the virtual processor state information in a memory portion coupled to the processor.

5. The method of claim 1 including directly emulating the device to the guest with the second VMM by bypassing the first VMM based on sharing virtual physical memory state information, related to the guest, between the first and second VMMs.

6. The method of claim 1 including directly emulating the device to the guest with the second VMM by bypassing the first VMM based on sharing address translation information, related to the guest, between the first and second VMMs.

7. The method of claim 1, wherein the first and second VMMs include equivalent device models.

8. The method of claim 1, including directly emulating a paravirtualized device driver corresponding to the guest.

9. The method of claim 1, including sending network packet information from the guest directly to the second VMM bypassing the first VMM.

10. An article comprising a medium storing instructions that enable a processor-based system to perform a method as defined in any one of claims 1 to 9.

11. An apparatus comprising:
a processor, coupled to a memory, to (1) execute a guest application on a first virtual machine (VM) stored in the memory; (2) execute the first VM on a first virtual machine monitor (VMM); (3) execute the first VMM on a second VMM in a nested virtualization environment; and (4) directly emulate an underlying virtualized entity to the guest with the second VMM.

12. The apparatus of claim 11, wherein the processor is to directly emulate the entity to the guest with the second VMM by bypassing the first VMM.

13. The apparatus of claim 11, wherein the processor is to directly emulate the entity to the guest with the second VMM by bypassing the first VMM based on sharing virtual guest state information between the first and second VMMs.

14. The apparatus of claim 11, wherein the processor is to directly emulate the entity to the guest with the second VMM by bypassing the first VMM based on sharing virtual guest processor state information between the first and second VMMs.

15. The apparatus of claim 11, wherein the processor is to directly emulate the entity to the guest with the second VMM by bypassing the first VMM based on sharing virtual memory state information, related to the guest, between the first and second VMMs.
